# EUROPEAN PATENT SPECIFICATION

(11) **EP 3 634 600 B1**
(45) Date of publication and mention of the grant of the patent: **13.07.2022**
(21) Application number: 18804934.0
(22) Date of filing: 22.05.2018
(51) Int. Cl.: B01D 24/20, B01D 24/38, B01D 15/02, B01D 24/30

(54) **METHOD AND APPARATUS FOR FILTRATION OF POLLUTED LIQUID**
VERFAHREN UND VORRICHTUNG ZUR FILTRATION EINER VERSCHMUTZTEN FLÜSSIGKEIT
PROCÉDÉ ET APPAREIL DE FILTRATION DE LIQUIDE POLLUÉ

(30) Priority: 22.05.2017 NO 20170832
(43) Date of publication of application: 15.04.2020
(73) Proprietor: M&M Engine AS, 5957 Myking (NO)
(72) Inventor: MICHELSEN, Erik, 5244 Fana (NO); MONSEN, Stein Kyrre, 5916 Isdaltstø (NO)
(74) Representative: Acapo AS
(86) International application number: PCT/NO2018/050132
(87) International publication number: WO 2018/217095

(56) References cited:
- EP-A1- 1 683 561
- GB-A- 2 052 469
- GB-A- 2 255 916
- JP-A- S55 100 898
- US-A- 981 031
- US-A- 1 604 649
- US-A- 3 512 641
- US-A- 3 786 923
- US-A- 5 891 433
- US-A1- 2003 010 699

## Description

### Field of the invention

The present invention relates to an apparatus and method for filtering any liquid through a filter material in order to remove pollution from the liquid in a single upright filtration tank.

### Disclosure of the state of art

Today's methods for filtering liquids are as follows:
- Cartridge filters with replaceable inserts.
- Drum filters
- Membrane filters
- Mineral filters

All methods are intended to remove pollution in a liquid

The cartridge filter has a woven filter cartridge with a specific opening for letting the liquid pass through. All particles bigger than the defined mesh size will be stopped in the filter cartridge. The filter cartridge must be replaced when the filter cartridge is saturated with particles

The drum filters have the filter material fixed to the inside of a drum shaped container. Liquid is introduced into the drum and the drum is rotating. The particles bigger than the mesh in the filter is stopped on the inside of the filter and is scraped of once during every rotation. The pollution in the filter drum is discharged.

Membrane filters works by pressurizing a liquid through layers of membranes and the clean liquid passes through the membrane. The pollution will be led out an opening for consecrated pollution.

Mineral filters have often a cartridge or manual filled filter material containing minerals such as clay. The liquid is forced through the minerals in the filter and leave the pollution in the minerals. The minerals have to be replaced when saturated with pollution

All known filtration methods are targeting to extract pollution from a liquid.

US 3786923 A disclose that a filter-adsorption media, such as activated carbon, is supplied to one end of a screw conveyor having a variable pitch along its length with the greater pitch being at the supply end. Sewage, such as from a marine toilet, is passed through a macerator and chemically treated before being introduced into the central portion of the screw conveyor to be mixed with the filter-adsorption media and compacted as the screw conveyor is rotated. The compacting produces a mixture of filter-adsorption media and sludge at the discharge end while the liquid is passed through the conveyor in counter-flow relationship, to the incoming filter-adsorption media and through the filter-adsorption media, and then to a discharge.

GB 2052469 A disclose a cleaning filter that has a cylindrical tank through which an axial pipe extends, the pipe having a screw blade attached thereon and being rotatable in the tank. A drum rotatably carried on the axial pipe is disposed within the tank and around the screw blade, the drum having a cylindrical body and an end cover mounted on the cylindrical body such that the cylindrical body is rotatable relative to the end cover. The end cover has a cleansing agent inlet and a cleansing agent outlet with the cleansing agent being removed from the drum by rotating the pipe means and the screw blade, the latter engaging the cleansing agent in the drum to thereby move the cleansing agent axially to the cleansing agent outlet. A filter is disposed on the outer periphery of the cylindrical body of the drum so that when the liquid to be cleaned flows into the tank from an inlet and is discharged through an outlet on the axial pipe, the liquid passes through the filter and the cleansing agent in the drum to thereby remove impurities from the liquid.

US 2003010699 A disclose a filtration apparatus comprising a container that houses a filtration tank to which contaminated water is supplied, a cleansing tank, and a screw conveyor disposed within said cleansing tank. Filtration media is housed within the cleansing tank and the container. The cleansing tank has lateral surface openings, lower openings, and an upper opening. When the screw conveyor rotates, filtration media as well as water (contaminated water) is conveyed upward from the lower openings to the upper opening while being agitated. At the same time, filtration media circulates between the cleansing tank and the container and is cleansed. When cleansing is complete, a backwash water supply pump backwashes water, and expels contaminants separated and removed from the filtration media out of the container by an expulsion pump. Lateral surface doors close lateral surface openings by drive means only during cleansing (agitation). This structure increases the filtration area.

EP 1683561 A1 disclose a filtration device equipped with: a filtration tank; a layer of particulate activated carbon within the filtration tank; a cleansing tank, which is vertically placed within the filtration tank and which has an opening at the lower end thereof; and the screw conveyor for cleansing the filtration media, which is provided within the cleansing tank. The screw conveyor has a shaft, which is suspended within the filtration tank from above. The upper portion of the shaft is driven, and the lower portion of the shaft is supported by an axial support section, which is fixed to the lower portion of the cleansing tank. The axial support section is equipped with a frictional wear compensating mechanism at a portion thereof at which the shaft and the axial support section contact each other.

JPS55100898 A disclose separation of water and solids by suction-filtering material in a treating tank with a tubular filter, discharging the remained treating material to the outside of the tank with a screw conveyor and sucking the residual water leaching out from the discharge route into the tubular filter. When the treating material such as sludge is pressure-fed into a treating tank through lead-in port, the fine granular solids and water leaches into a tubular filter through its water feed port of the filter and the treating material leaches in that state into the filter from the open bottom surface of the filter. Next, when the revolving speed of the revolving shaft increases, the solids in the filter are flown toward the inside wall surface by centrifugal force and drop into the tank and remain there. The water content in the filter is sucked through suction hole into suction barrel and is discharged through a discharge pipe and discharge housing. On the other hand, the revolution of a screw causes the treating material in the bottom of the tank to be conveyed upward in a conveying barrel, where it is compressed and the squeezed out water content passes through the water feed port through the through-hole and is fed into the filter. GB 2 255 916 A, US 5 891 433 A, US 1 604 649 A and US 3 512 641 A shows further filter devices.

### Objects of the present invention

The method and filtration apparatus according to the invention differs from the known methods by being a continuous filtration method contrary to the known methods which are batch methods, and where the filter insert have to be replaced. The in-line filtration invention may result in a filtration process:
- Requiring less labour per litre liquid filtered.
- No washing of equipment as for batch equipment.
- Enabling unmanned 24/7 operation.
- Closed waste disposal logistics

It is thus an object of the present invention to provide an apparatus and method for a basically continuous filtration process, in where there is no need for cleaning of the filtration tank. The invention will also give the flexibility to change to a new/different filter material type in short time, thus making it possible to change filtration characteristic for a different liquid or pollution.

It is at least an object to provide an improved apparatus and method for continuously filtering of liquid.

### Summary of the invention

According a first aspect of the invention, a method for filtering a liquid through a filter material is provided, comprising the steps: feeding of fresh filter material via a fresh filter material inlet in a lower part of the filtration tank, feeding of polluted liquid via a liquid inlet in an upper part of the filtration tank, mixing of the filter material and the polluted liquid in the single upright filtration tank to filter the polluted liquid by conveying filter material from the lower part of the filtration tank to the upper part of the filtration tank, discharge of used filter material through an upper used filter material outlet in the upper part of the filtration tank, and discharge of clean liquid from the filtration tank through a lower clean liquid outlet in the lower part of the filtration tank.

Filter material can be continuously conveyed from the lower part of the filtration tank to the upper part of the filtration tank by a screw conveyer, and polluted liquid is pumped in through the liquid inlet in the upper part of the filtration tank at a temperature that together with the filter material ends up at desired filtering temperature in the filtration tank.

Alternatively, filter material can be semi-continuously conveyed from the lower part of the filtration tank to the upper part of the filtration tank, in that filter material for a complete filter batch is fed into the filtration tank, and conveyed up in the tank by a screw conveyer, and polluted liquid is pumped in through the liquid inlet in the upper part of the filtration tank at a temperature that together with the filter material ends up at desired filtration temperature in the filtration tank.

The time to convey the filter material from the lower part of the filtration tank to the upper part of the filtration tank can be set to a time which optimizes the use of the filter material before it is saturated, such as approximately 60 to 500 minutes.

Liquids are circulated from the lower part of the filtration tank to the upper part of the filtration tank in a sparging loop comprising a circulation pump.

Further, polluted liquid are heated or heat is maintained in the sparging loop by a heat exchanger.

Used filter material can be discharged through the upper used filter material outlet when the filter material is saturated.

Fresh filter material feed via the filter material inlet to the filtration tank can be at least one of clay, activated charcoal, moss, sand, sintered glass, or ceramic filter material.

According to a second aspect of the invention, a filtration apparatus for filtration of liquids is provided, comprising a single upright filtration tank for holding liquid and filter material, said filtration tank having a lower part with a lower fresh filter material inlet and a lower clean liquid outlet, an upper part with an upper used filter material outlet and an upper liquid inlet for polluted liquid, wherein said filtration tank further comprises an internal conveyer for feeding of filter material from the lower part of the filtration tank to the upper part of the filtration tank.

Said conveyer can be a screw conveyer. Further, the filtration tank can be an upright circular-cylindrical cylinder, and the conveyer a vertical screw conveyer located inside the filtration tank.

The lower part of the filtration tank may comprise a screw conveyer for feeding of fresh filter material from the filter material inlet to the interior of the filtration tank. A filter material hopper can be located above the screw conveyer in the filter material inlet.

The upper part of the filtration tank can also comprise a screw conveyer for feeding of used filter material from the interior of the tank to the used filter material outlet. The filtration tank may further comprise a circulation pump for creation of a sparging loop, where the liquid is circulated from the lower part of the filtration tank to the upper part of the filtration tank. A heat exchanger to heat or maintain heat in the liquid during the filtration process can be included in the sparging loop.

### Description of the diagrams

Embodiments of the present invention will now be described, by way of example only, with reference to the following diagrams wherein:
Figure 1 shows a first embodiment of a filtration apparatus which is not claimed in the present application.
Figure 2 shows a second embodiment of a filtration apparatus according to the invention.

### Description of preferred embodiments of the invention

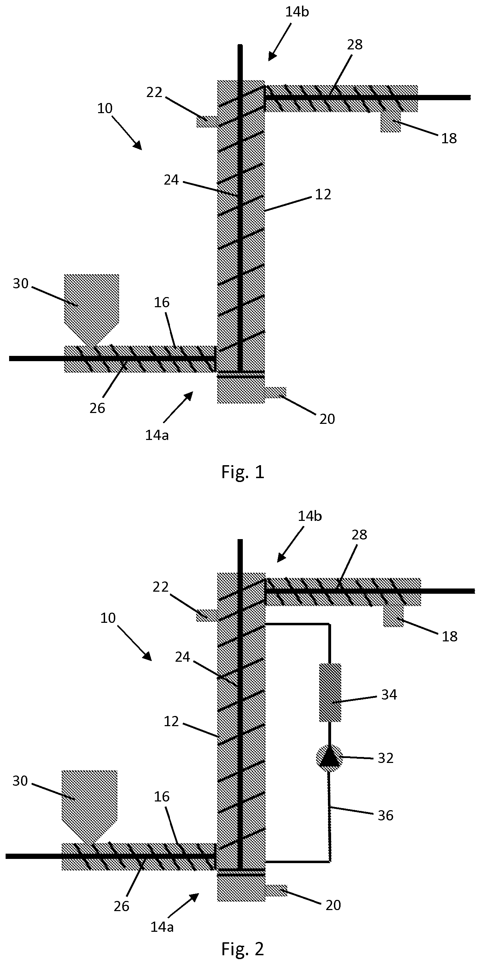

Figure 1 shows a filtration apparatus 10 with a single upright filtration tank 12 in the form of a cylinder with a lower part 14a and an upper part 14b. The lower part 14a comprises a lower fresh filter material inlet 16 and a lower clean liquid outlet 20. The lower filter material inlet 16 may further comprise a horizontal screw conveyer 26 for conveying fresh filter material from a filter hopper 30 to the lower part 14a of the filtration tank 12. The upper part 14b of the filtration tank 12 may comprise an upper liquid inlet 22 for polluted liquid and an upper used filter material outlet 18. The upper part 14b of the filtration tank 12 may further comprise a horizontal screw conveyer 28 for conveying used filter material to the upper used filter material outlet 18.

The upright filtration tank 12 further comprises an internally and vertically placed conveyer, preferable a screw conveyer 24, for transport of filter material, and liquid, vertically in the filtration tank 12.

Figure 2 shows a second embodiment of the filtration apparatus 10 according to the invention. The filtering apparatus 10 is similar to the first embodiment shown in figure 1, but may include a sparging loop 36. The sparging loop can include a pump 32 for pumping liquid from the lower part 14a of the filtration tank 12 to the upper part 14b of the filtration tank 12. The sparging loop 36 may further include a heat exchanger 34 heating or maintaining heat in the liquids in the loop 36.

Each screw conveyer 24,26,28 are preferable driven by an adjoining drive motor (not shown), and connected to a control system. The filter material inlet 16 can also be connected to the same control system. The same applies to the clean liquid outlet 20 and used filter material outlet 18. All parts of the apparatus 10 may be connected to said control system, thus providing an automatic filtration process.

The method according to the invention may include two filtration processes.

A first idea of the present invention is to have a continuous filtration process instead of batch process. This is done by feeding the fresh filter material into the lower part 14a of the cylindrical upright filtration tank 12, where the transport screw 24 is located inside. The time to move the filter material, by the screw 24, from the bottom 14a of the filtration tank 12 to the top outlet 18 for used filter material in the upper part 14b of the filtration tank 12, is preferable equal to the time for saturating the filter material (normally 60-500 minutes). In the upper part 14b of the single upright filtration tank 12 the polluted liquid will be pumped in through the liquid inlet 22 at a temperature that together with the filter material ends up at the ideal filtration temperature in the filtration tank 12. The outside of the filtration tank 12 can be heat traced if required. When the filter material, injected in the bottom 14a of the filtration tank 12, meets the polluted liquid it will filter the pollution in the liquid. In the bottom the filter material will have the maximum ability to absorb pollutions and in the top, near the exit, it will have the minimum ability to absorb pollutions. The liquid will have its maximum pollution in the top of the tank 12 and its minimum pollution in the bottom of the tank 12, near the exit. The volumetric flow and the filter material vs. the volumetric flow of the polluted liquid will give the efficiency of the filtration. If required the apparatus 10 can be equipped with the sparging loop 36 where the polluted liquid can be circulated from the bottom of the filtration tank 12 to the top of the filtration tank. If required this loop can pass the heat exchanger 34 to heat or maintain heat during the filtration process. The cleaned liquid will be taken out in the bottom of the filtration tank 12 through the clean liquid outlet 20 and the used filter material will be discharged in the top of the filtration tank 12 through the used filter material outlet 18.

A second idea of the present invention is to have a semi-continuous filtration process instead of a batch process. This is done by feeding the fresh filter material into the lower part 14a of the single upright filtration tank 12, where the transport screw 24 is located inside. The filter material for a complete filtration batch will then be screwed up to a level in the filtration tank 12. In the top of the filtration tank 12 the polluted liquid will be pumped in through the liquid inlet 22 at a temperature that together with the filter material ends up at the ideal filtration temperature in the filtration tank 12. The outside of the filtration tank 12 can be heat traced if required. If required the apparatus 10 can be equipped with the sparging loop 36 where the liquid can be circulated from the bottom 14a of the filtration tank 12 to the top 14b of the filtration tank 12. If required this loop 36 can pass the heat exchanger 34 to heat or maintain heat during the filtration process. When the filtration batch is completed the clean liquid is drained out in the bottom 14a of the apparatus 10, through the clean liquid outlet 20, and the used filter material is discharged at the top 14b through the used filter material outlet 18.

Fresh filter material feed via the filter material inlet 16 to the filtration tank 12 can for instance be picked from a group of: clay, activated charcoal, moss, sand, sintered glass, or ceramic filter material. The filter material can be at least one of said materials, or a combination of materials. Other filter material may also be used.

## Claims

1. Method for filtration of polluted liquid in a single upright filtration tank (12), comprising the steps:
- feeding of fresh filter material via a fresh filter material inlet (16) in a lower part (14a) of the filtration tank (12),
- feeding of polluted liquid via a liquid inlet (22) in an upper part (14b) of the filtration tank (12),
- mixing of the filter material and the polluted liquid in the single upright filtration tank (12) to filter the polluted liquid by conveying filter material from the lower part (14a) of the filtration tank (12) to the upper part (14b) of the filtration tank (12),
- discharge of used filter material through an upper used filter material outlet (18) in the upper part (14b) of the filtration tank (12), and
- discharge of clean liquid from the filtration tank (12) through a lower clean liquid outlet (20) in the lower part (14a) of the filtration tank (12),
**characterized in that** polluted liquid is circulated from the lower part (14a) of the filtration tank (12) to the upper part (14b) of the filtration tank (12) in a sparging loop (36) comprising a circulation pump (32), wherein polluted liquid is heated or heat is maintained in the sparging loop (36) by a heat exchanger (34).

2. Method according to claim 1, wherein filter material is continuously conveyed from the lower part (14a) of the filtration tank (12) to the upper part (14b) of the filtration tank (12) by a screw conveyer (24), and polluted liquid is pumped in through the liquid inlet (22) in the upper part (14b) of the filtration tank (12) at a temperature that together with the filter material ends up at desired filtration temperature in the filtration tank (12).

3. Method according to claim 1, wherein filter material is semi-continuously conveyed from the lower part (14a) of the filtration tank (12) to the upper part (14b) of the filtration tank (12), in that filter material for a complete batch is feed into the filtration tank, and conveyed up in the filtration tank (12) by a screw conveyer (24), and polluted liquid is pumped in through the liquid inlet (22) in the upper part (14b) of the filtration tank (12) at a temperature that together with the filter material ends up at desired filtration temperature in the filtration tank (12).

4. Method according to claim 1, wherein the time to convey the filter material from the lower part (14a) of the filtration tank (12) to the upper part (14b) of the filtration tank (12) is set to approximately 60 - 500 minutes.

5. Method according to claim 1, wherein used filter material is discharged through the upper used filter material outlet (18) when the filter material is saturated.

6. Method according to claim 1, wherein fresh filter material feed via the filter material inlet (16) to the filtration tank (12) is at least one of: clay, activated charcoal, moss, sand, sintered glass, or ceramic filter material.

7. Filtration apparatus (10) for filtration of polluted liquid, comprising a single upright filtration tank (12) for holding filter material and polluted liquid, said filtration tank (12) having a lower part (14a) with a lower fresh filter material inlet (16) and a lower clean liquid outlet (20), an upper part (14b) with an upper used filter material outlet (18) and an upper liquid inlet (22) for polluted liquid, wherein said single upright filtration tank (12) further comprises an internal conveyer (24) for feeding of filter material from the lower part (14a) of the filtration tank (12) to the upper part (14b) of the filtration tank (12), **characterized in that**
the filtration tank (12) comprises a circulation pump (32) for creation of a sparging loop (36) where the polluted liquid is circulated from the lower part (14a) of the filtration tank (12) to the upper part (14b) of the filtration tank (12), wherein a heat exchanger (34) to heat or maintain heat in polluted liquid during the filtration process is included in the sparging loop (36).

8. Filtration apparatus (10) according to claim 7, wherein said conveyer (24) is a screw conveyer.

9. Filtration apparatus (10) according to claim 7, wherein said filtration tank (12) is an upright circular-cylindrical cylinder, and the conveyer (24) is a vertical screw conveyer located inside the filtration tank (12).

10. Filtration apparatus (10) according to claim 7, wherein the lower part (14a) of the filtration tank (12) comprises a screw conveyer (26) for feeding of filter material from the fresh filter material inlet (16) to the interior of the filtration tank (12).

11. Filtration apparatus according to claim 10, wherein a filter material hopper (30) is located above the screw conveyer (26) in the fresh filter material inlet (16).

12. Filtration apparatus according to claim 7, wherein the upper part (14b) of the filtration tank (12) comprises a screw conveyer (28) for feeding of used filter material from the interior of the filtration tank (12) to the used filter material outlet (18).

## Patentansprüche

1. Verfahren zur Filtration von verschmutzter Flüssigkeit in einem einzelnen aufrechten Filtrationstank (12), das die folgenden Schritte umfasst:
- Einspeisen von frischem Filtermaterial über einen Einlass (16) für frisches Filtermaterial in einem unteren Teil (14a) des Filtrationstanks (12),
- Einspeisen von verschmutzter Flüssigkeit über einen Flüssigkeitseinlass (22) in einem oberen Teil (14b) des Filtrationstanks (12),
- Mischen des Filtermaterials und der verschmutzten Flüssigkeit in dem einzelnen aufrechten Filtrationstank (12), um die verschmutzte Flüssigkeit durch Befördern von Filtermaterial von dem unteren Teil (14a) des Filtrationstanks (12) zu dem oberen Teil (14b) des Filtrationstanks (12) zu filtern,
- Abführen von benutztem Filtermaterial durch einen oberen Auslass (18) für benutztes Filtermaterial in dem oberen Teil (14b) des Filtrationstanks (12) und
- Abführen von sauberer Flüssigkeit aus dem Filtrationstank (12) durch einen unteren Auslass (20) für saubere Flüssigkeit in dem unteren Teil (14a) des Filtrationstanks (12),
**dadurch gekennzeichnet, dass** verschmutzte Flüssigkeit von dem unteren Teil (14a) des Filtrationstanks (12) zu dem oberen Teil (14b) des Filtrationstanks (12) in einer Durchperlungsschleife (36) umgewälzt wird, die eine Umwälzpumpe (32) umfasst, wobei durch einen Wärmetauscher (34) verschmutzte Flüssigkeit erwärmt wird oder Wärme in der Durchperlungsschleife (36) erhalten wird.

2. Verfahren nach Anspruch 1, wobei Filtermaterial durch einen Schneckenförderer (24) kontinuierlich von dem unteren Teil (14a) des Filtrationstanks (12) zu dem oberen Teil (14b) des Filtrationstanks (12) befördert wird und verschmutzte Flüssigkeit durch den Flüssigkeitseinlass (22) in dem oberen Teil (14b) des Filtrationstanks (12) bei einer Temperatur eingepumpt wird, die zusammen mit dem Filtermaterial bei einer gewünschten Filtrationstemperatur in dem Filtrationstank (12) endet.

3. Verfahren nach Anspruch 1, wobei das Filtermaterial halbkontinuierlich von dem unteren Teil (14a) des Filtrationstanks (12) zu dem oberen Teil (14b) des Filtrationstanks (12) befördert wird, wobei Filtermaterial für eine vollständige Charge in den Filtrationstank eingespeist und durch einen Schneckenförderer (24) in den Filtrationstank (12) befördert wird und verschmutzte Flüssigkeit durch den Flüssigkeitseinlass (22) in den oberen Teil (14b) des Filtrationstanks (12) bei einer Temperatur eingepumpt wird, die zusammen mit dem Filtermaterial bei einer gewünschten Filtrationstemperatur in dem Filtrationstank (12) endet.

4. Verfahren nach Anspruch 1, wobei die Zeit, um das Filtermaterial von dem unteren Teil (14a) des Filtrationstanks (12) zu dem oberen Teil (14b) des Filtrationstanks (12) zu befördern, auf ungefähr 60 bis 500 Minuten festgesetzt wird.

5. Verfahren nach Anspruch 1, wobei benutztes Filtermaterial durch den oberen Auslass (18) für benutztes Filtermaterial abgeführt wird, wenn das Filtermaterial gesättigt ist.

6. Verfahren nach Anspruch 1, wobei frisches Filtermaterial, das über den Filtermaterial-Einlass (16) zu dem Filtrationstank (12) eingespeist wird, mindestens eines von Folgendem ist: Ton, Aktivkohle, Moos, Sand, gesintertes Glas oder keramisches Filtermaterial.

7. Filtrationsvorrichtung zur Filtration von verschmutzter Flüssigkeit, die einen einzelnen aufrechten Filtrationstank (12) zum Aufnehmen von Filtermaterial und verschmutzter Flüssigkeit umfasst, wobei der Filtrationstank (12) einen unteren Teil (14a) mit einem Einlass (16) für frisches Filtermaterial und einem unteren Auslass (20) für saubere Flüssigkeit, einen oberen Teil (14b) mit einem oberen Auslass (18) für benutztes Filtermaterial und einem oberen Flüssigkeitseinlass (22) für verschmutzte Flüssigkeit umfasst, wobei der einzelne aufrechte Filtrationstank (12) ferner einen inneren Förderer (24) zum Einspeisen von Filtermaterial von dem unteren Teil (14a) des Filtrationstanks (12) zu dem oberen Teil (14b) des Filtrationstanks (12) umfasst, **dadurch gekennzeichnet, dass**
der Filtrationstank (12) eine Umwälzpumpe (32) zum Erzeugen einer Durchperlungsschleife (36) umfasst, wo die verschmutzte Flüssigkeit von dem unteren Teil (14a) des Filtrationstanks (12) zu dem oberen Teil (14b) des Filtrationstanks (12) umgewälzt wird, wobei ein Wärmetauscher (34), der die verschmutzte Flüssigkeit während des Filtrationsprozesses wärmt oder warm hält, in der Durchperlungsschleife (36) eingeschlossen ist.

8. Filtrationsvorrichtung (10) nach Anspruch 7, wobei der Förderer (24) ein Schneckenförderer ist.

9. Filtrationsvorrichtung (10) nach Anspruch 7, wobei der Filtrationstank (12) ein aufrechter kreiszylindrischer Zylinder ist und der Förderer (24) ein vertikaler Schneckenförderer ist, der innerhalb des Filtrationstanks (12) angeordnet ist.

10. Filtrationsvorrichtung (10) nach Anspruch 7, wobei der untere Teil (14a) des Filtrationstanks (12) einen Schneckenförderer (26) zum Einspeisen von Filtermaterial von dem Einlass (16) für frisches Filtermaterial zu dem Inneren des Filtrationstanks (12) umfasst.

11. Filtrationsvorrichtung nach Anspruch 10, wobei ein Filtermaterialtrichter (30) oberhalb des Schneckenförderers (26) in dem Einlass (16) für frisches Filtermaterial angeordnet ist.

12. Filtrationsvorrichtung nach Anspruch 7, wobei der obere Teil (14b) des Filtrationstanks (12) einen Schneckenförderer (28) zum Einspeisen von benutztem Filtermaterial von dem Inneren des Filtrationstanks (12) zu dem Auslass (18) für benutztes Filtermaterial umfasst.

## Revendications

1. Procédé de filtration de liquide pollué dans un seul réservoir de filtration (12) vertical, comprenant les étapes:
- d'alimentation de matériau filtrant frais *via* une entrée de matériau filtrant frais (16) dans une partie inférieure (14a) du réservoir de filtration (12),
- d'alimentation de liquide pollué *via* une entrée de liquide (22) dans une partie supérieure (14b) du réservoir de filtration (12),
- de mélange de matériau filtrant et du liquide pollué dans le seul réservoir de filtration (12) vertical pour filtrer le liquide pollué en transportant un matériau filtrant de la partie inférieure (14a) du réservoir de filtration (12) à la partie supérieure (14b) du réservoir de filtration (12),
- de décharge du matériau filtrant usagé à travers une sortie de matériau filtrant usagé supérieure (18) dans la partie supérieure (14b) du réservoir de filtration (12), et
- de décharge de liquide nettoyé du réservoir de filtration (12) à travers une sortie de liquide nettoyé inférieure (20) dans la partie inférieure (14a) du réservoir de filtration (12),
**caractérisé en ce que** le liquide pollué est circulé de la partie inférieure (14a) du réservoir de filtration (12) à la partie supérieure (14b) du réservoir de filtration (12) dans une boucle de barbotage (36) comprenant une pompe à circulation (32), dans lequel le liquide pollué est chauffé ou de la chaleur est maintenue dans la boucle de barbotage (36) par un échangeur de chaleur (34).

2. Procédé selon la revendication 1, dans lequel le matériau filtrant est continuellement transporté de la partie inférieure (14a) du réservoir de filtration (12) à la partie supérieure (14b) du réservoir de filtration (12) par un transporteur à vis (24), et du liquide pollué est pompé dans l'entrée de liquide (22) dans la partie supérieure (14b) du réservoir de filtration (12) à une température qui avec le matériau filtrant finit à une température de filtration désirée dans le réservoir de filtration (12).

3. Procédé selon la revendication 1, dans lequel le matériau filtrant est transporté de manière semi-continue de la partie inférieure (14a) du réservoir de filtration (12) à la partie supérieure (14b) du réservoir de filtration (12), en ce qu'un matériau filtrant pour un lot complet est alimenté dans le réservoir de filtration, et transporté jusque dans le réservoir de filtration (12) par un transporteur à vis (24), et un liquide pollué est pompé à travers l'entrée de liquide (22) dans la partie supérieure (14b) du réservoir de filtration (12) à une température qui avec le matériau filtrant finit à une température de filtration désirée dans le réservoir de filtration (12).

4. Procédé selon la revendication 1, dans lequel le temps pour transporter le matériau filtrant de la partie inférieure (14a) du réservoir de filtration (12) à la partie supérieure (14b) du réservoir de filtration (12) est réglé sur approximativement 60 à 500 minutes.

5. Procédé selon la revendication 1, dans lequel du matériau filtrant usagé est déchargé à travers la sortie de matériau filtrant usagé supérieure (18) lorsque le matériau filtrant est saturé.

6. Procédé selon la revendication 1, dans lequel une alimentation de matériau filtrant frais *via* l'entrée de matériau filtrant (16) au réservoir de filtration (12) est au moins l'un parmi: de l'argile, du charbon actif, de la mousse, du sable, du verre fritté, ou un matériau filtrant en céramique.

7. Appareil de filtration (10) pour filtrer un liquide pollué, comprenant un seul réservoir de filtration (12) vertical pour contenir un matériau filtrant et un liquide pollué, ledit réservoir de filtration (12) ayant une partie inférieure (14a) avec une entrée de matériau filtrant frais inférieure (16) et une sortie de liquide nettoyé inférieure (20), une partie supérieure (14b) avec une sortie de matériau filtrant usagé supérieure (18) et une entrée de liquide supérieure (22) pour un liquide pollué, dans lequel ledit seul réservoir de filtration (12) vertical comprend en outre un transporteur interne (24) pour alimenter un matériau filtrant de la partie inférieure (14a) du réservoir de filtration (12) à la partie supérieure (14b) du réservoir de filtration (12), **caractérisé en ce que**
le réservoir de filtration (12) comprend une pompe à circulation (32) pour créer une boucle de barbotage (36) où le liquide pollué est circulé de la partie inférieure (14a) du réservoir de filtration (12) à la partie supérieure (14b) du réservoir de filtration (12), dans lequel un échangeur de chaleur (34) pour chauffer ou maintenir la chaleur dans un liquide pollué lors du processus de filtration est inclus dans la boucle de barbotage (36).

8. Appareil de filtration (10) selon la revendication 7, dans lequel ledit transporteur (24) est un transporteur à vis.

9. Appareil de filtration (10) selon la revendication 7, dans lequel ledit réservoir de filtration (12) est un cylindre circulaire-cylindrique vertical, et le transporteur (24) est un transporteur à vis vertical situé à l'intérieur du réservoir de filtration (12).

10. Appareil de filtration (10) selon la revendication 7, dans lequel la partie inférieure (14a) du réservoir de filtration (12) comprend un transporteur à vis (26) pour alimenter en matériau filtrant de l'entrée de matériau filtrant frais (16) à l'intérieur du réservoir de filtration (12).

11. Appareil de filtration selon la revendication 10, dans lequel une cuve de matériau filtrant (30) est située au-dessus du transporteur à vis (26) dans l'entrée de matériau filtrant frais (16).

12. Appareil de filtration selon la revendication 7, dans lequel la partie supérieure (14b) du réservoir de filtration (12) comprend un transporteur à vis (28) pour alimenter en matériau filtrant usagé de l'intérieur du réservoir de filtration (12) à la sortie de matériau filtrant usagé (18).
